# EUROPEAN PATENT SPECIFICATION

(11) **EP 3 221 575 B1**
(45) Date of publication and mention of the grant of the patent: **06.01.2021**
(21) Application number: 15793846.5
(22) Date of filing: 12.11.2015
(51) Int. Cl.: F02M 55/00, F02M 55/02, F02M 61/16, F02M 69/50, F16L 3/237

(54) **FUEL RAIL ASSEMBLY FOR AN INTERNAL COMBUSTION ENGINE**
KRAFTSTOFFLEISTENANORDNUNG FÜR EINE BRENNKRAFTMASCHINE
ENSEMBLE RAIL DE CARBURANT POUR UN MOTEUR À COMBUSTION INTERNE

(30) Priority: 19.11.2014 EP 14193839
(43) Date of publication of application: 27.09.2017
(73) Proprietor: Vitesco Technologies GmbH, 30165 Hannover (DE)
(72) Inventor: DI DOMIZIO, Gisella, I-56017 San Giuliano Terme (IT); LATINI, Massimo, I-50053 Empoli (FI) (IT); PASQUALI, Marco, I-57128 Livorno (IT); WEIGL, Georg, 93049 Regensburg (DE)
(74) Representative: Waldmann, Georg Alexander
(86) International application number: PCT/EP2015/076457
(87) International publication number: WO 2016/079004

(56) References cited:
- EP-A1- 2 333 302
- WO-A1-2013/114324
- WO-A1-2014/016231
- WO-A1-2017/050850
- CN-U- 203 499 881
- DE-A1-102011 086 209
- DE-B3-102006 010 244
- JP-A- 2008 163 780
- US-A1- 2013 068 198

## Description

Fuel rail assembly for an internal combustion engine The present disclosure relates to a fuel rail assembly for an internal combustion engine.

Fuel rails, in particular for gasoline direct injection engines are usually designed according to the engine packaging of the specific internal combustion engine. Usually, the design of the fuel rail is specific to a particular engine and unusable for other engines.

WO2014/016231 A1 discloses a fuel rail assembly.

It is an object of the present disclosure to specify a fuel rail which is easily configurable during production for use with engines of different shapes and/or which is particularly cost effective.

According to one aspect, a fuel rail assembly for an internal combustion engine according to claim 1 is specified.

The fuel rail assembly comprises an elongated tubular fuel rail. The elongated tubular fuel rail is in particular a tubular fuel reservoir. Preferably, it is a straight tube. The fuel rail is in particular made of a metal or an alloy.

Preferably, fuel is supplied under high pressure into the fuel rail, in particular by a fuel pump, and stored in the fuel rail for being dispensed into the internal combustion engine by a plurality of fuel injectors. The fuel injectors are in particular operable to inject the fuel directly into respective combustion chambers of the combustion engine.

The fuel rail assembly has a plurality of fuel delivery lines for hydraulically coupling the fuel rail to the fuel injectors which are operable to inject fuel into combustion engine. Each of the fuel delivery lines branches off from the fuel rail. Each of the fuel delivery lines is in particular assigned to one and only one of the injectors.

In the following, only one of the fuel delivery lines is described in detail. However, the fuel delivery lines are preferably of identical type. The fuel delivery lines may be arranged subsequently to one another along an elongation direction of the tubular fuel rail.

Each fuel delivery line has an injector cup for receiving a fuel inlet portion of a respective one of the fuel injectors. The injector cup in particular shapes a recess in which the fuel inlet portion is shifted for hydraulically coupling the injector cup and the fuel inlet portion.

Each fuel delivery line further has a pipe which is arranged between the fuel rail and the injector cup for hydraulically coupling the injector cup to the fuel rail. In particular, the pipe is operable to guide the fuel from the fuel rail to the injector cup. A downstream end of the pipe is preferably hydraulically and mechanically connected to the injector cup. An upstream end of the pipe is preferably hydraulically and mechanically connected to the fuel rail, either directly or via an outlet port on the fuel rail. In the present context, the expressions "upstream" and "downstream" in particular refer to the direction of fuel flow from the fuel rail to the fuel injector.

Each fuel delivery line further comprises a fixation bracket which is configured for positionally fixing the fuel delivery line which respect to the combustion engine. In this way, the fixation bracket also contributes to positionally fixing the fuel rail assembly with respect to the combustion engine. A rigid connection is established between the fixation bracket and a portion of the pipe. This portion of the pipe is also referred to as a "fixation portion" of the pipe in the following.

The fixation portion of the pipe is preferably spaced apart from the fuel rail and also from the fuel injector cup. Such a position of the rigid connection is particularly advantageous with regard to the mechanical stability of the fuel delivery line.

The injector cup, the pipe, and the fixation bracket are individual parts. In other words, the injector cup, the pipe and the fixation bracket are separately manufactured pieces which are fixed together only during assembly of the fuel rail assembly. Expediently, the fixation bracket may be spaced apart from the injector cup and from the fuel rail. Preferable, the fixation bracket, absent the rigid connection, is rotatable around a central axis of the fixing portion of the pipe, preferably by 360°.

In this way, the fuel rail assembly is adjustable for different engine configurations by adjusting the positions of the parts relative to one another or by exchanging only, for example, the pipe by a differently shaped or sized pipe, while retaining the design of the remaining parts. In this way, production of the fuel rail assembly may be particularly cost effective. In particular, the fixation bracket is rotatable around the fixation portion of the pipe during production of the fuel rail assembly - i.e. in particular absent the rigid connection - for adjusting the angular position of the fixation bracket relative to the fuel rail.

The fixation bracket comprises a tubular receptacle and at least one connection plate. The tubular receptacle and the at least one connection plate are separate parts which are joined together by means of at least one further rigid connection.

The tubular receptacle is preferably spaced apart from the pipe. Preferably, the at least one connection plate has a fixing portion which is remote from the tubular receptacle. The rigid connection between the fixation bracket and the pipe is preferably established between the fixing portion of the at least one connection plate and the fixation portion of the pipe.

The tubular receptacle is in particular in the shape of a straight tube, i.e. in particular of a hollow cylinder, sometimes also denoted as a cylinder shell. For example, the tubular receptacle is a steel tube. In some embodiments, the tubular receptacle is an extruded part, a cold-formed part or a turned - i.e. machined - part. In this way, the receptacle may be particularly robust and at the same time cost-effective.

The connection plate is a sheet-metal part or, in the case of a plurality of connection plates, the connection plates preferably each are individual sheet-metal parts. Preferably, each connection plate is a stamped part. In this way, the fixation bracket is particularly light-weight and can be manufactured particularly cost effectively.

In one example, not being part of the invention, the fixation bracket has two connection plates which sandwich the tubular receptacle and the pipe. In a preferred development, the fixation portion of the pipe and the tubular receptacle each have a central axis, the central axes being parallel so that they define a central plane. The central axes in particular correspond to the elongation directions of the tubular receptacle and of the fixation portion of the pipe, respectively. The two connection plates are, in this case, positioned on opposite side of the central plane and preferably spaced apart from the central plane. Each of the connection plates has preferably a main plane of extension which is parallel to the central plane. The main plane of extension is in this case in particular the plane through the geometric center of gravity of the respective connection plate which is defined by the two orthogonal spatial directions in which the connection plate has its largest dimensions. In this way, the fuel delivery lines are particularly easy to assemble.

According to the invention, the fixation bracket has only one connection plate which has a U-shape as its basic shape to sandwich the tubular receptacle and the pipe between the two legs of the U-shape. In particular, the connection plate has the basic shape of a U in top view along the central axis of the tubular receptacle and the fixation portion of the pipe. The legs of the U-shape are in particular positioned on opposite sides of the central plane which is defined by the central axes of the receptacle and the pipe. Either the rigid connection between the fixation bracket and the pipe or the further rigid connection between the connection plate and the tubular receptacle may be established between the connection portion of the U-shape and the receptacle or the pipe, respectively. In this case, the "connection portion" of the U-shape is the rounded portion of the U-shape which connects the two legs. A particularly stable connection may be achievable in this way. However, manufacturing the connection plate with satisfactory tolerances is more demanding in this embodiment.

In one embodiment, the connection plate or each of the connection plates has a further fixing portion which adjoins the tubular receptacle. The fixing portion(s) and/or the further fixing portion(s) are preferably shaped so that they are operable to establish a full area contact with the pipe or the tubular receptacle, respectively. In particular, the fixing portion(s) and/or the further fixing portion (s) is/are in the general shape of a section of the cylinder shell, the inner surface of the cylinder shell corresponding to an outer surface of the fixation portion of the pipe or the tubular receptacle, respectively. In this way, a particularly stable connection between the receptacle tube and the connection plate as well as between the fixation bracket and the pipe is achievable. The fixation bracket is advantageously connectable to the pipe during assembly of the fuel rail assembly in each desired angular position and at different axial positions with respect to the central axis of the pipe. In this way, the fuel rail assembly is particularly easily adjustable for different engine configurations.

In one embodiment, the at least one connection plate has at least one reinforcement bulge in a central region. The central region is positioned between the tubular receptacle and the pipe and in particular bridges the gap between the tubular receptacle and the pipe. For example, the reinforcement bulge is in the shape of a section of a cone shell. In one development, the connection plate or each connection plate has two reinforcement bulges, each of which are in the shape of sections of cone shells having their vertices pointing towards one another and having coaxial central axes which are parallel to the central axis of the tubular receptacle and the fixation portion of the pipe.

In one embodiment, the injector cup has an indexing element for determining an angular position of the respective fuel injector relative to the injector cup. The individual parts of the fuel delivery line are preferably configured and connected in such fashion that an angular position of the fixation bracket relative to the indexing element and/or relative to the elongation direction of the fuel rail is adjustable during assembly of the fuel rail assembly. For example, the injector cup is rotatable relative to the pipe during manufacturing the fuel rail assembly and a rigid connection between the injector cup and the pipe is only established during manufacturing of the fuel rail assembly after setting a predetermined angular position of the indexing element, which may be predetermined according to the configuration of the respective engine for which the fuel rail assembly is manufactured. Analogously, the fixation bracket may be rotatable relative to the pipe before establishing the rigid connection between the fixation bracket and the pipe during manufacturing the fuel rail assembly.

In advantageous embodiment, the rigid connection between the fixation bracket and the pipe and/or the rigid connection between the pipe and the injector cup and/or the further rigid connection(s) between the at least one connection plate and the tubular receptacle are brazed and/or welded connections. For example, the respective connection is established by a welded pre-connection and a fluid-tight brazed connection. The welded pre-connection may be a spot-welded connection. By means of such connections, the angular positions are particularly easily adjustable during assembly of the fuel rail assembly.

In one embodiment, each fuel delivery line comprises and outlet port tube. The outlet port tube is in particular a further individual part, which is in particular manufactured separately from the injector cup, the pipe and the fixation bracket. The fixation bracket may expediently be spaced apart from the outlet port tube. The outlet port tube is preferably attached to an outer surface of the fuel rail. In particular, it is shaped in such fashion, that its position on the outer surface is adjustable during assembly of the fuel rail assembly. For example, during manufacturing of the fuel rail assembly, the fuel rail may be provided with bores for dispensing fuel into the fuel delivery lines. The position of the bores is predetermined according to the engine configuration for which the fuel rail assembly is produced and may vary from fuel rail to fuel rail. The outlet port tubes can be positioned laterally surrounding a respective bore of the fuel rail, independent on the position of the bore in the fuel rail. The outlet port tubes are preferably attached to the outer surfaces of the fuel rail by means of a brazed and/or welded connection, in particular as detailed in the preceding paragraph.

According to a further embodiment, the fuel rail has a sensor port tube which branches off from the fuel rail. In another embodiment, the fuel rail assembly has a fixation lug for fixing the fuel rail to the internal combustion engine. The sensor port tube and/or the fixation lug is/are fixed to the outer surface of the fuel rail. The fixation may be established by a respective brazed and/or welded connection, in particular as detailed above. Preferably, the sensor port tube and/or the fixation lug is/are shaped and connected with the fuel rail in such fashion that a position of the sensor port tube and the fixation lug, respectively, on the outer surface is adjustable during assembly of the fuel rail assembly. For example, the outlet port tube, the sensor port tube and/or the fixation lug have respective connection surfaces which are congruent to a portion of the outer surface of the fuel rail.

According to a further embodiment, the fuel rail assembly comprises an inlet fitting which is received in the fuel rail and/or an end plug which is plugged into the fuel rail.

Preferably, the inlet fitting and the end plug are positioned at opposite axial ends of the fuel rail. Alternatively, the fuel rail assembly can have end plugs at both axial ends of the fuel rail while the inlet fitting branches off from the outer, circumferential surface of the fuel rail. The end plug(s) can be replaced by a respective end cap which is shifted over the fuel rail. In one embodiment, the inlet fitting and/or the end plug (s) or end cap(s) are fixed to the outer surface of the fuel rail by a respective brazed and/or welded connection, in particular as detailed above. The inlet fitting and/or the end plug can also be fixed to the fuel rail by means of a brazed connection with an inner surface of the fuel rail, in particular in embodiments in which the inlet fitting and the end plug (s), respectively, are shifted into the fuel rail.

In a preferred embodiment, all connections between the individual, above mentioned parts of the fuel rail assembly are brazed and/or welded connections. For example, the connections are each established by a welded pre-connection and a fluid-tight brazed connection. The welded pre-connection may be a spot-welded connection. In this way, production of the fuel rail is particularly cost effective.

That the fixation brackets "positionally fix" the fuel delivery line with respect to the engine and the fixation lug "fixes" the fuel rail to the internal combustion engine means in particular that the fuel delivery line or the fuel rail, respectively, is held in place with respect to the combustion engine by means of the fixation bracket or the fixation lug, respectively. In particular, the fixation brackets and/or the fixation lug are coupled to the combustion engine by screws or bolts. Preferably, there are no further screw-connections between the fuel rail assembly and the combustion engine, apart from those with the fixation brackets and the fixation lug, as the case may be. This, however, is not meant to exclude the presence of other, in particular inevitable, mechanical coupling between the fuel rail and the combustion engine, e.g. through hydraulic connections such as via the inlet fitting or the fuel injectors. Preferably, however, no mechanical connection is made between the fuel rail assembly and the combustion engine - apart from the fixation brackets and the fixation lug, as the case may be - which is primarily provided for mechanically fixing the fuel rail assembly to the combustion engine.

Further advantages, advantageous embodiments and developments of the fuel rail assembly and of the method will become apparent from the exemplary embodiments which are described below in association with schematic figures.

In the figures:
- Figure 1: shows a schematic exploded view of a portion of an internal combustion engine with a fuel rail assembly according to an example,

- Figure 2: shows a schematic exploded view of the fuel rail assembly according to the example,

- Figure 3: shows a schematic exploded view of a fixation bracket of the fuel rail assembly according to the example,
- Figure 4a: shows a schematic sectional view of the fixation bracket,
- Figure 4b: shows a schematic sectional view of a fixation bracket according to an embodiment of the invention,

- Figure 5: shows a top view of the fuel rail assembly according to the example,
- Figure 6: shows a side view of the fuel rail assembly according to the example, and
- Figure 7: shows a side view of a fuel rail assembly according to a second example.

In the exemplary embodiments in figures similar, identical or similarly acting elements are provided with the same reference symbols.

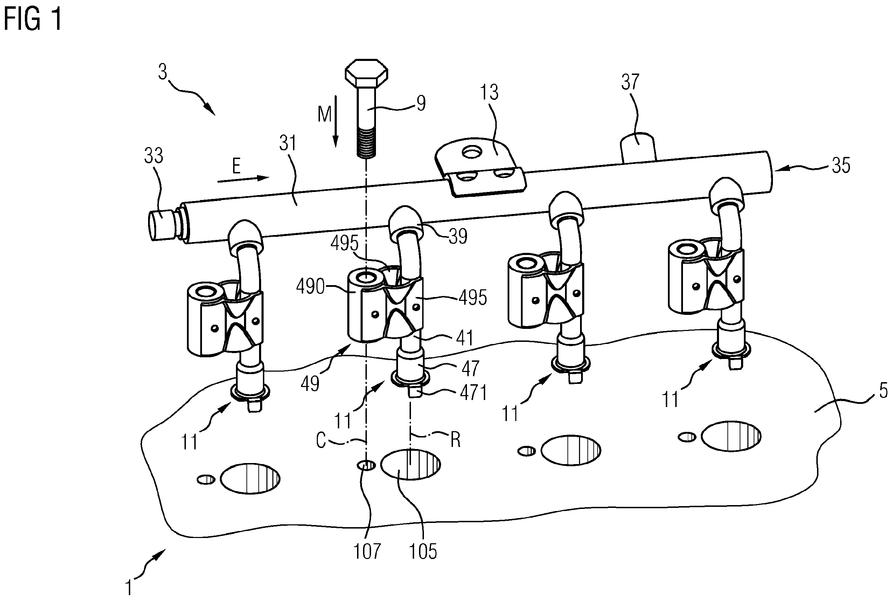

Figure 1 shows an exploded respective view of an internal combustion engine 1 with a fuel rail assembly 3 according to Z an example. The internal combustion engine 1 has a cylinder head 5 which comprises installation bores 105 for receiving fuel injectors 7 (not shown in figure 1).

The fuel rail assembly 3 comprises in elongated tubular fuel rail 31. For example, the fuel rail 31 is metallic; in particular it is made from steel. Fuel is supplied to the fuel rail 31 through an inlet fitting 33 on one axial end of the fuel rail 31. The opposite axial end of the fuel rail 31 is sealed by an end plug 35 (not visible in figure 1). The fuel rail 31 is fixed with respect to the engine one by means of a fixation lug 13. A sensor port tube 37 branches off from the fuel rail 31.

In addition, a plurality of fuel delivery lines 11 branch off from the fuel rail 31. The fuel delivery lines 11 are spaced apart from one another and follow one another in an elongation direction E of the fuel rail 31. The fuel delivery lines 11 are operable to connect the fuel rail 31 hydraulically to the fuel injectors 7. In an expedient embodiment, the fuel injectors 7 are also held in place by the fuel rail assembly 3.

All fuel delivery lines 11 are of identical construction. For the sake of better representability, only one of the fuel delivery lines 11 is provided with reference symbols in Figure 1. Each fuel delivery line 11 comprises an outlet port tube 39, a pipe 41 and an injector cup 47. The outlet port tube 39, the pipe 41 and the injector cup 47 are individual, separately manufactured and separately provided parts, which are assembled during manufacturing the fuel rail assembly 3. The outlet port tube 39 is fixed to an outer surface of the fuel rail 31. It circumferentially surrounds a bore in the circumferential wall of the fuel rail 31 so that it is hydraulically connected to the fuel rail 31 and fuel can flow from the fuel rail 31 into the outlet port tube 39.

An upstream end of the pipe 41 is fixed to the outlet port tube 39 for hydraulically and mechanically coupling the pipe 41 to the outlet port tube 49. In one development, the upstream end is shifted through the outlet port tube 39 into the respective bore in the fuel rail 31. A downstream end of the pipe 41 is hydraulically and mechanically coupled to the injector cup 47. In this way, the injector cup 47 is hydraulically coupled to the fuel rail 31 by means of the pipe 41 and the outlet port tube 39. In one embodiment, the pipe 41 is a rigid metal tube and is in one development made from steel.

Each fuel delivery line 11 comprises a further individual part which is a fixation bracket 49. The fixation bracket 49 is rigidly connected to a portion of the pipe 41 between the outlet port tube 39 and the injector cup 47. This fixation portion of the pipe 41 and, thus, also the fixation bracket 49 are spaced apart from the injector cup 47 and from the outlet port tube 39 and the fuel rail 31.

The fuel delivery lines 11 are rigidly fixed to the cylinder head 5 by means of fixation elements 9 via the fixation brackets 49.

Only one of the fixation elements 9 is shown in figure 1. It may be a screw, as shown in figure 1, or a bolt, for example. The screw which represents the fixation element 9 in the present embodiment is screwed into a threaded opening 107 of the cylinder head 5 for establishing the rigid fixation.

In the present embodiment, each fixation bracket 49 is assembled from a tubular receptacle 490 and two connection plates 495 as its individual constituent parts. The connection plates 495 are stamped metal parts which are made from a sheet-metal.

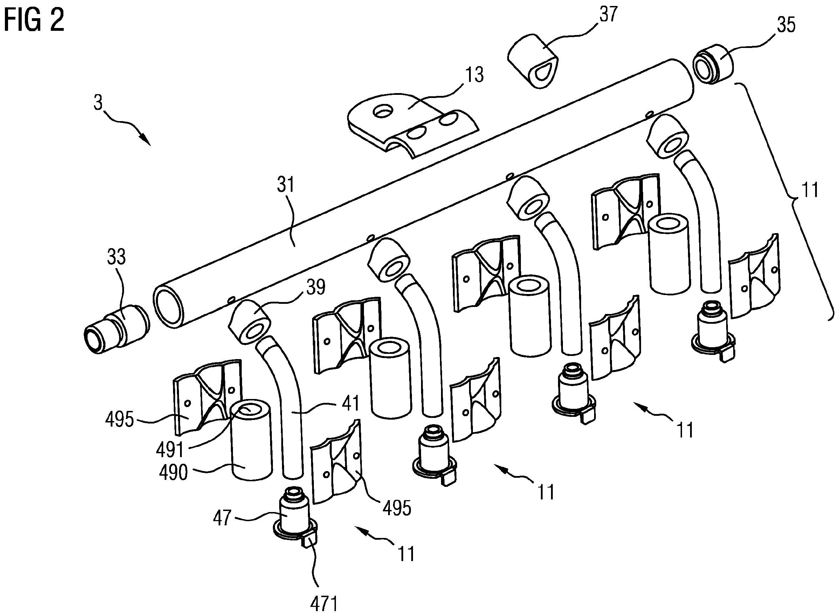

Figure 2 shows the individual parts of the fuel rail assembly 3 in an exploded view. The individual parts are connected to one another as described above and fixed by means of rigid connections which in particular are brazed connections. It also is considerable that some or all of the connections are welded connections.

Expediently, producing the rigid connections may involve pre-connecting the individual parts by means of welded connections, in particular by spot welds, before the brazed connections are manufactured. Such connections are also referred to as brazed connections in the present context.
In particular, during manufacturing of the fuel rail assembly 3, the individual parts are closely fitted to one another. Subsequently, spot-welded connections are produced at the respective joined interface regions which positionally fix the parts for the subsequent manufacturing steps. In one embodiment, a filler metal or alloy is applied at the respective joined interface regions subsequently to producing the spot-welded connections. For example in this case, the filler material may be applied in form of a paste. Alternatively, the filler metal or alloy can be applied before producing the spot-welded connections. For example in this case, the filler material may be applied in form of a self-supporting and/or dimensionally stable object, such as a ring. In one development, one of the parts comprises a recess at the interface region for accommodating the filler material object. The preassembled fuel rail assembly 3 is subsequently introduced into a furnace for melting the filler metal or filler alloy, respectively. In an expedient embodiment, copper is used as the filler material.

In this way, a rigid brazed connection is in particular established between in the fixation bracket 49 and the above mentioned portion of the pipe 41 - which portion is also referred to as a fixation portion of the pipe 41 in the following -and a further rigid brazed connection is established between the tubular receptacle 490 and the connection plates 495 of the fixation bracket 49.

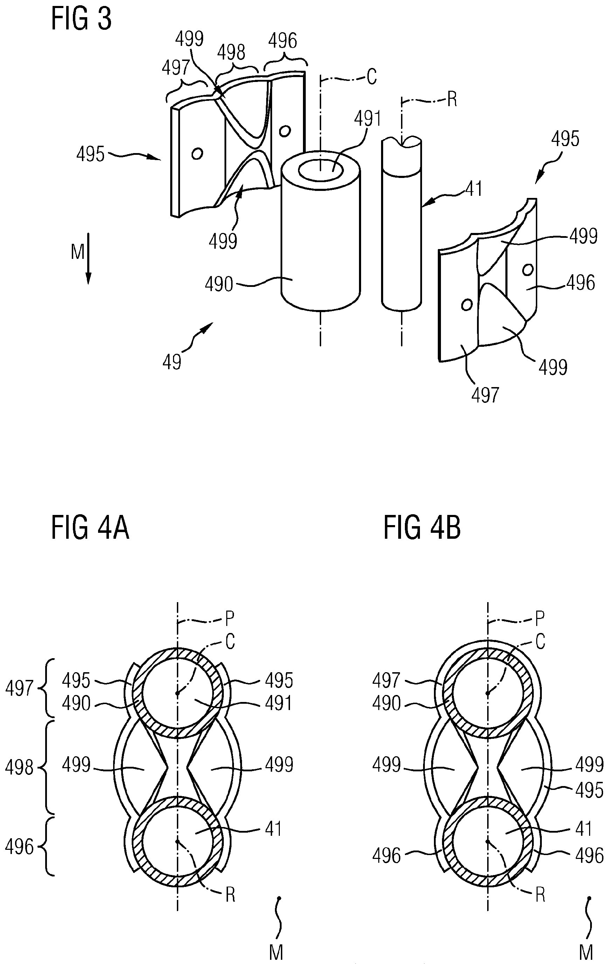

Figure 3 shows a schematic exploded view of the fixation bracket 49. In figure 3 also the fixation portion of the pipe 41 is shown.

In the present embodiment, the tubular receptacle 490 is an extruded or cold-formed steel part. It is in the shape of a straight tube. More specifically, it is a cylinder shell having a central axis C. The receptacle 490 is perforated in direction along the central axis C by a central opening 491 which is configured to receive the fixation element 9.

The central axis C of the receptacle 490 extends parallel to a central axis R of the fixation portion of the pipe 41. The central axis C of the receptacle 490 and the central axis R of the fixation portion of the pipe 41 are spaced apart from each other. In this way, a gap is established between the pipe 41 and the tubular receptacle 490 and the pipe 41 and the receptacle 490 are spaced apart from one another.

The central axes C, R define a central plane P. The two connection plates 495 are positioned on opposite sides of the plane P. This can be best seen in Figure 4a, which shows a cross-sectional view of the pipe 41 and the receptacle 490 in a viewing direction along the central axes C, R.

Each connection plate 495 has a fixing portion 496 which is in the shape of a section of a cylinder shell and is in full area contact with the fixation portion of the pipe 41. In lateral direction from the central axis R of the pipe 41 to the central axis C of the receptacle 490, the fixing portion 496 is followed by central region 498 of the connection plate 495 which, in turn is succeeded by a further fixing portion 497, which is also in the shape of a cylinder shell. The further fixing portion 497 is shaped correspondingly to the tubular receptacle 490 so that its inner surface is in full area contact with an outer circumferential surface of the tubular receptacle 490.

The central region 498 comprises to reinforcement bulges 499, which are in the shape of cone sections having their vertices pointing towards one another and having cone axes which are coaxial and which are parallel to the central axes C and R of the receptacle 490 and the pipe 41 respectively.

The rigid brazed connection between the fixation bracket 49 and the pipe 41 is established between the fixing portions 496 of the connections plates 495 and the fixation portion of the pipe 41. The further rigid brazed connections between the connection plates 495 and the tubular receptacle 490 are established between the further fixing portions 497 of the connection plates 495 and the outer circumferential surface of the tubular receptacle 490.

As can be seen in Figure 2, the injector cup 47 has an upper end portion which is shifted into the downstream end of the pipe 41 for connecting the injector cup 47 and the pipe 41. The upstream end of the pipe 41 is shifted into the outlet port tube 39.

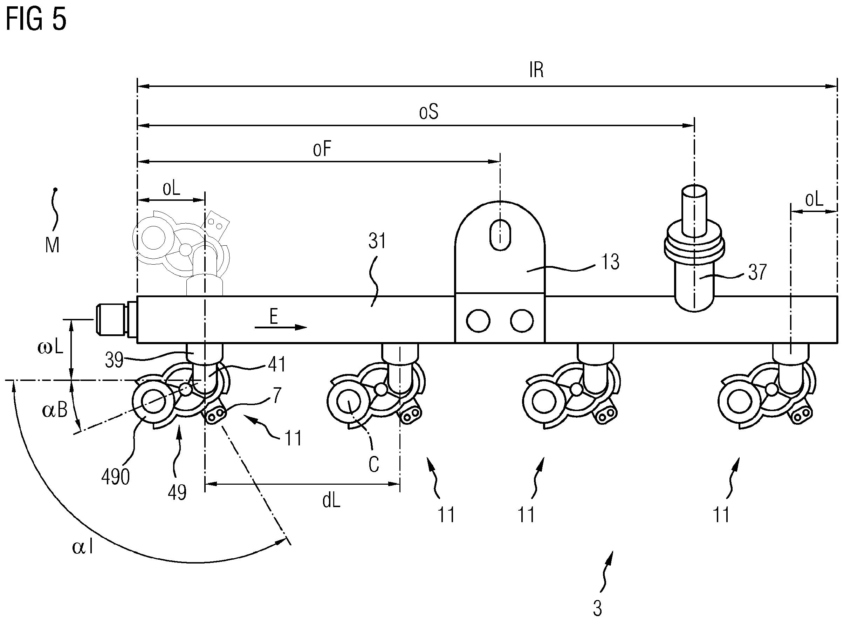

The connection surfaces of the outlet port tubes 39 which are adjoining the fuel rail 31, the connection surface of fixation lug 13 and the connection surface of the sensor port tube 37 each are portions of a cylinder surface which is congruent to the cylinder surface which will represents the outer surface of the fuel rail 31. In this way, the outlet port tubes 39, the fixation lug 13 and the sensor port tube 37 can be positioned at any desirable place on the outer surface of the fuel rail 31. Therefore, the position OL of the first outlet port tube 39 with respect to an axial end of the fuel rail 31 can be selected during manufacturing the fuel rail assembly 3, the position OF of the fixation lug 13 along the elongation direction E of the fuel rail 31 can be selected during manufacturing the fuel rail assembly 3 as well as the position OS of the sensor port tube 37 along the elongation direction E. This can be best seen in Fig. 5 which shows a top view along the central axis C of the tubular receptacle 490, which is also a mounting direction M of the fuel rail assembly 3.

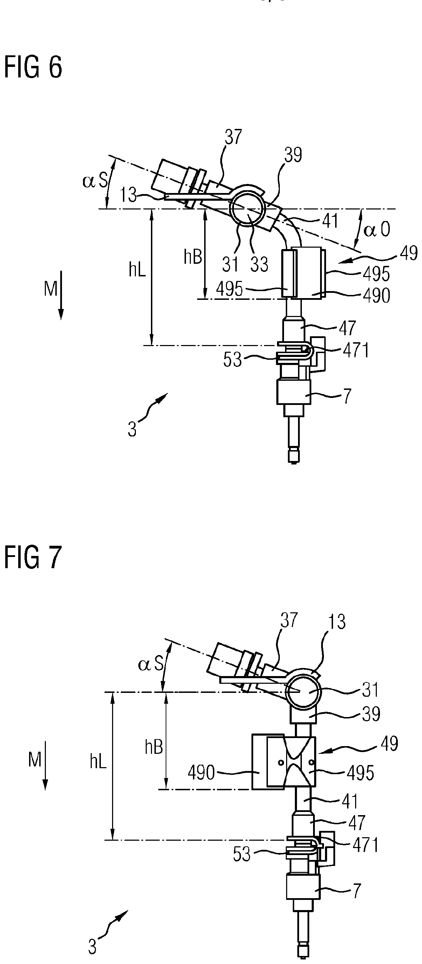

In Figure 6, which shows a side view of the fuel rail assembly it is best visible that also the elevation angles αO, αS of the outlet port tube 39 and the sensor port tube 37 relative to a plane which is perpendicular to the mounting direction M can be adjusted to a respective engine geometry during assembly of the fuel rail assembly 3. In addition also an elevation angle of the mounting lug 13 relative to that plane is adjustable.

In the present example, each injector cup 47 has an indexing element 471. In the present case, the indexing element 471 is an indexing tab which axially protrudes beyond the rest of the injector cup 47 towards the fuel injector 7. The fuel injector 7 has a corresponding indexing element (not visible in the figures) to set a predetermined angular position between the injector cup 47 and the respective fuel injector 7. Before establishing of the rigid brazed connection between the pipe 41 and the injector cup 47, the injector cup 47 is rotatable relative to the pipe 41 around the central axis R so that the angular position αI of the indexing element 471 relative to the elongation direction E (cf. Figure 5) is variable during manufacturing of the fuel rail assembly 3.

Since the fixation bracket 49 is connected to the pipe 41 only during assembling the fuel rail assembly 3 and the fixing portion 496 allows for any desired rotational orientation of the connecting plates 495 to the pipe 41, the angular position αB of the tubular receptacle 490 to the elongation direction E of the fuel rail 31 (cf. Figure 5) is also adjustable during manufacturing the fuel rail assembly 3. The angular position αB is in particular the angle having as its legs the distance vector from the central axis R of the pipe t to the central axis C of the tubular receptacle and the elongation direction E of the fuel rail 41.

Also the axial position hB of the bracket 49 on the pipe 41 is adjustable before the rigid brazed connection between the pipe 41 and the connection plates 495 is established (cf. Figure 6) . Also, the distance dL between the individual fuel delivery lines 11 is adjustable by means of positioning the outlet port tube 39.

In addition, by means of the shape and length of the pipe 41, a lateral offset wL of the injector cup 47 - and, thus, the fuel injector 7 - from the fuel rail 31 (see Figure 5) and the distance hL of the fuel rail 31 to the fuel injector cup 47 in the mounting direction M (see Figure 6) is adjustable. Finally also the length lR of the fuel rail 31 can be selected.

Apart from changing the shape and length of the pipe 41 and the length lR of the fuel rail 31, all of the above mentioned adjustments in angles, positions and distances can be achieved using the same standard components. Therefore, the fuel rail assembly 3 is easily configurable in size and shape for different engines 1 with using the same parts. Therefore, a particular cost-effective manufacturing of the fuel rail assembly 3 is achievable.

Figure 4b shows a fuel rail assembly 3 according to an embodiment of the invention in a sectional view corresponding to that of figure 4a. The fuel rail assembly 3 according to the second embodiment corresponds in general to that of first embodiment. However, instead of two connection plates 495, the fixation brackets 49 according to this embodiment only have one single connection plate 495.

In the present embodiment, the connection plate 495 has, in the top view along the central axis C of the receptacle 490 the basic shape of the letter U. The legs of the U are positioned on opposite sides of the central plane P. The further fixing portion 497 which establishes the ridged brazed connection with the tubular receptacle 490 is represented by the intermediate portion of the U-shape which connects the legs.

It is also conceivable that the U shape is closed at the opposite end, so that the intermediated portion which connects the legs extends around the pipe 41 for establishing the rigid connection with the fixation portion of the pipe 41. This variant is not shown in the figures.

As in the example, the connection plate 495, more specifically each leg of the connection plate 495, has a central region 498. The central regions 498 bridge the gap between the pipe 41 and the receptacle 490 and each comprise two reinforcement bulges 499 which are in the shape of cone sections having their vertices pointing towards each other.

Figure 7 shows a schematic side view of a fuel rail assembly 3 according to a second example. The fuel rail assembly 3 corresponds in general to the fuel rail assembly 3 according to first example.

However, the pipe 41 is a straight tube in the third embodiment. This has the effect that the injector cup 47 is not laterally displaced with respect to the fuel rail 31, i.e. wL = 0. In contrast thereto, the pipe 41 according to the first embodiment has a straight section comprising the fixation portion and a bent section upstream of the straight section.

While the invention is described according specific exemplary embodiments, it is not restricted thereto.

## Claims

1. Fuel rail assembly (3) for an internal combustion engine (1) comprising an elongated tubular fuel rail (31) and a plurality of fuel delivery lines (11) branching off from the fuel rail (31) for hydraulically coupling the fuel rail (31) to fuel injectors (7) which are operable to inject fuel into the combustion engine (1), each fuel delivery line (11) having
- an injector cup (47) for receiving a fuel inlet portion of a respective one of the fuel injectors (7),
- a pipe (41) being arranged between the fuel rail (31) and the injector cup (47) for hydraulically coupling the injector cup (47) to the fuel rail (31), and
- a fixation bracket (49) which is configured for positionally fixing the fuel delivery line (11) with respect to the engine (1), wherein the fixation bracket (49) has one connection plate (495) which has a U-shape as its basic shape to sandwich a tubular receptacle (490) and the pipe (41) between the two legs of the U-shape
wherein
- a rigid connection is established between the fixation bracket (49) and a portion of the pipe (41), said portion being spaced apart from each of the fuel rail (31) and from the injector cup (47),
- the injector cup (47), the pipe (41), and the fixation bracket (49) are individual parts, and
- the fixation bracket (49) is spaced apart from the injector cup (47) and from the fuel rail (31),
- the fixation bracket (49) comprises a tubular receptacle (490) and one connection plate (495),
- the tubular receptacle (490) and the connection plate (495) are separate parts which are joined together by means of at least one further rigid connection,
- the tubular receptacle (490) is spaced apart from the pipe (41) and
- the rigid connection between the fixation bracket (49) and the pipe (41) is established between a fixing portion (496) of the at least one connection plate (495), which fixing portion is remote from the tubular receptacle (490), and said portion of the pipe (41).

2. The fuel rail assembly (3) according to the preceding claim, wherein
- each fuel delivery line comprises an outlet port tube (39) which is attached to an outer surface of the fuel rail (31) by means of a brazed or welded connection and
- the fixation bracket (49) is spaced apart also from the outlet port tube (39).

3. The fuel rail assembly (3) according to one of the preceding claims, wherein the fixing portion (496) of the connection plate (495) and/or a further fixing portion (497) of the connection plate (495), the further fixing portion (497) adjoining the tubular receptacle (490), is/are in the general shape of a section of a cylinder shell, an inner surface of the cylinder shell corresponding to an outer surface of said portion of the pipe (41) or said tubular receptacle (490), respectively, to establish a full-area contact between the fixing portion (496) and the pipe (41) or the further fixing portion (497) and the tubular receptacle (490), respectively.

4. The fuel rail assembly (3) according to one of claims 1 to 3, wherein the connection plate (495) has at least one reinforcement bulge (499) in a central region (498) between the tubular receptacle (490) and the pipe (41) .

5. The fuel rail assembly (3) according to one of claims 1 to 4, wherein the connection plate (495) is made from sheet-metal.

6. The fuel rail assembly (3) according to one of the preceding claims, wherein the injector cup (47) has an indexing element (471) for determining an angular position of the respective one of the fuel injectors (7) relative to the injector cup (47) and the individual parts of the fuel delivery line (11) are configured and connected in such fashion that an angular position of the fixation bracket (49) relative to the indexing element (471) and/or relative to the elongation direction (E) of the fuel rail (31) is adjustable during assembly of the fuel rail assembly (3) .

7. The fuel rail assembly (3) according to one of the preceding claims, wherein the rigid connection and/or the further rigid connection(s) is/are brazed or welded connections.

8. The fuel rail assembly (3) according to one of the preceding claims, wherein the pipe (41) is connected to the injector cup (47) by means of a brazed or welded connection.

9. The fuel rail assembly (3) according to one of the preceding claims, wherein the tubular receptacle (490) has an opening (491) which perforates the tubular receptacle (490) in a mounting direction (M), a central axis (C) of the opening (491) being parallel to a central axis (R) of said portion of the pipe (41).

10. The fuel rail assembly (3) according to one of the preceding claims, comprising at least one of the following elements:
- a sensor port tube (37) branching off from the fuel rail (31),
- a fixation lug (13) for fixing the fuel rail (31) to the internal combustion engine (1),
wherein
- the sensor port tube (37) and/or the fixation lug (13) is/are fixed to an outer surface of the fuel rail (31) by a respective brazed or welded connection, and/or
- the sensor port tube (37) and/or the fixation lug (13) are shaped and connected to the fuel rail (31) in such fashion that a position of the sensor port tube (37) and/or the fixation lug (13), respectively, on the outer surface is adjustable during assembly of the fuel rail assembly (3) .

11. The fuel rail assembly (3) according to one of the preceding claims, comprising at least one of the following elements:
- an inlet fitting (33) received in the fuel rail (31),
- an end plug (35) plugged into the fuel rail (31),
wherein the inlet fitting (33) and/or the end plug (35) is/are fixed to the fuel rail (31) by a respective brazed or welded connection.

## Patentansprüche

1. Kraftstoffleistenanordnung (3) für eine Brennkraftmaschine (1), umfassend eine längliche, röhrenförmige Kraftstoffleiste (31) und eine Vielzahl von Kraftstoffversorgungsleitungen (11), die von der Kraftstoffleiste (31) abzweigen, um die Kraftstoffleiste (31) hydraulisch mit Kraftstoffeinspritzventilen (7) zu verbinden, die betätigbar sind, um Kraftstoff in die Brennkraftmaschine (1) einzuspritzen, wobei jede Kraftstoffversorgungsleitung (11) aufweist:
- einen Einspritzdüsentrichter (47) zum Aufnehmen einer Kraftstoffeinlasspartie von einer entsprechenden einen der Kraftstoffeinspritzdüsen (7),
- eine Leitung (41), die zwischen der Kraftstoffleiste (31) und dem Einspritzdüsentrichter (47) für ein hydraulisches Verbinden des Einspritzdüsentrichters (47) mit der Kraftstoffleiste (31) angeordnet ist, und
- einen Befestigungshalter (49), der dazu ausgelegt ist, die Kraftstoffversorgungsleitung (11) in Bezug auf die Kraftmaschine (1) in ihrer Position zu befestigen,
wobei
der Befestigungshalter (49) eine Verbindungsplatte (495) aufweist, die als ihre Grundform eine U-Form aufweist, um eine röhrenförmige Aufnahme (490) und die Leitung (41) zwischen den zwei Beinen der U-Form einzulegen,
wobei
- eine starre Verbindung zwischen dem Befestigungshalter (49) und einer Partie der Leitung (41) aufgebaut ist, wobei die Partie von sowohl der Kraftstoffleiste (31) als auch dem Einspritzdüsentrichter (47) beabstandet ist,
- der Einspritzdüsentrichter (47), die Leitung (41) und der Befestigungshalter (49) einzelne Teile sind, und
- der Befestigungshalter (49) vom Einspritzdüsentrichter (47) und von der Kraftstoffleiste (31) beabstandet ist,
- der Befestigungshalter (49) eine röhrenförmige Aufnahme (490) und eine Verbindungsplatte (495) umfasst,
- die röhrenförmige Aufnahme (490) und die Verbindungsplatte (495) separate Teile sind, die mittels mindestens einer weiteren starren Verbindung miteinander verbunden sind,
- die röhrenförmige Aufnahme (490) von der Leitung (41) beabstandet ist, und
- die starre Verbindung zwischen dem Befestigungshalter (49) und der Leitung (41) aufgebaut ist zwischen einer Befestigungspartie (496) der mindestens einen Verbindungsplatte (495), wobei die Befestigungspartie von der röhrenförmigen Aufnahme (490) und der Partie der Leitung (41) entfernt ist.

2. Kraftstoffleistenanordnung (3) nach dem vorangehenden Anspruch, wobei
- jede Kraftstoffversorgungsleitung ein Auslassanschlussrohr (39) umfasst, das an einer äußeren Oberfläche der Kraftstoffleiste (31) mittels einer gelöteten oder geschweißten Verbindung angebracht ist, und
- der Befestigungshalter (49) auch von dem Auslassanschlussrohr (39) beabstandet ist.

3. Kraftstoffleistenanordnung (3) nach einem der vorangehenden Ansprüche, wobei die Befestigungspartie (496) der Verbindungsplatte (495) und/oder eine weitere Befestigungspartie (497) der Verbindungsplatte (495), wobei die weitere Befestigungspartie (497) an die röhrenförmige Aufnahme (490) angrenzt, in der allgemeinen Form eines Abschnitts einer Zylinderschale ist/sind, wobei eine innere Oberfläche der Zylinderschale mit einer äußeren Oberfläche der Partie der Leitung (41) bzw. der röhrenförmigen Aufnahme (490) korrespondiert, um einen Vollflächenkontakt zwischen der Befestigungspartie (496) und der Leitung (41) bzw. der weiteren Befestigungspartie (497) und der röhrenförmigen Aufnahme (490) aufzubauen.

4. Kraftstoffleistenanordnung (3) nach einem der Ansprüche 1 bis 3, wobei die Verbindungsplatte (495) mindestens eine Verstärkungswulst (499) in einer zentralen Region (498) zwischen der röhrenförmigen Aufnahme (490) und der Leitung (41) aufweist.

5. Kraftstoffleistenanordnung (3) nach einem der Ansprüche 1 bis 4, wobei die Verbindungsplatte (495) aus Metallblech hergestellt ist.

6. Kraftstoffleistenanordnung (3) nach einem der vorangehenden Ansprüche, wobei der Einspritzdüsentrichter (47) ein indexierendes Element (471) aufweist, um eine Winkelposition der entsprechenden einen der Kraftstoffstoffeinspritzdüsen (7) relativ zu dem Einspritzdüsentrichter (47) festzustellen, und die einzelnen Teile der Kraftstoffversorgungsleitung (11) dazu ausgelegt und in einer solchen Weise verbunden sind, dass eine Winkelposition des Befestigungshalters (49) relativ zu dem indexierenden Element (471) und/oder relativ zu der Verlängerungsrichtung (E) der Kraftstoffleiste (31) während des Montierens der Kraftstoffleistenanordnung (3) einstellbar ist.

7. Kraftstoffleistenanordnung (3) nach einem der vorangehenden Ansprüche, wobei die starre Verbindung und/oder die weitere(n) starre(n) Verbindung(en) (eine) gelötete oder geschweißte Verbindung(en) ist/sind.

8. Kraftstoffleistenanordnung (3) nach einem der vorangehenden Ansprüche, wobei die Leitung (41) mit dem Einspritzdüsentrichter (47) mittels einer gelöteten oder geschweißten Verbindung verbunden ist.

9. Kraftstoffleistenanordnung (3) nach einem der vorangehenden Ansprüche, wobei die röhrenförmige Aufnahme (490) eine Öffnung (491) aufweist, welche die röhrenförmige Aufnahme (490) in einer Montagerichtung (M) perforiert, wobei eine mittlere Achse (C) der Öffnung (491) parallel zu einer mittleren Achse (R) der Partie der Leitung (41) ist.

10. Kraftstoffleistenanordnung (3) nach einem der vorangehenden Ansprüche, umfassend mindestens eines der folgenden Elemente:
- ein Sensoranschlussrohr (37), das von der Kraftstoffleiste (31) abzweigt,
- eine Befestigungsöse (13) zum Befestigen der Kraftstoffleiste (31) an der Brennkraftmaschine (1),
wobei
- das Sensoranschlussrohr (37) und/oder die Befestigungsöse (13) an einer äußeren Oberfläche der Kraftstoffleiste (31) durch eine entsprechende gelötete oder geweißte Verbindung angebracht ist/sind, und/oder
- das Sensoranschlussrohr (37) und/oder die Befestigungsöse (13) so geformt und an der Kraftstoffleiste (31) angebracht sind, dass eine Position des Sensoranschlussrohrs (37) bzw. der Befestigungsöse (13) während des Montierens der Kraftstoffleistenanordnung (3) auf der äußeren Oberfläche einstellbar ist.

11. Kraftstoffleistenanordnung (3) nach einem der vorangehenden Ansprüche, umfassend mindestens eines der folgenden Elemente:
- ein Einlassfitting (33), das in der Kraftstoffleiste (31) aufgenommen ist,
- einen Abschlussstopfen (35), der in die Kraftstoffleiste (31) eingesteckt ist,
wobei das Einlassfitting (33) und/oder der Abschlussstopfen (35) an der Kraftstoffleiste (31) durch eine entsprechende gelötete oder geschweißte Verbindung befestigt ist/sind.

## Revendications

1. Ensemble de rampe d'alimentation (3) pour un moteur à combustion interne (1), comprenant une rampe d'alimentation tubulaire allongée (31) et une pluralité de conduites d'alimentation en carburant (11) partant de la rampe d'alimentation (31) pour accoupler de manière hydraulique la rampe d'alimentation (31) à des injecteurs de carburant (7) qui peuvent être commandés pour injecter du carburant dans le moteur à combustion interne (1), chaque conduite d'alimentation en carburant (11) présentant :
- un raccord d'injecteur (47) pour recevoir une portion d'entrée de carburant d'un injecteur de carburant respectif parmi les injecteurs de carburant (7),
- un conduit (41) disposé entre la rampe d'alimentation (31) et le raccord d'injecteur (47) pour accoupler hydrauliquement le raccord d'injecteur (47) à la rampe d'alimentation (31), et
- une console de fixation (49) qui est configurée pour fixer en position la conduite d'alimentation en carburant (11) par rapport au moteur (1),
la console de fixation (49) présentant une plaque de connexion (495) en forme de U en tant que forme de base, prévue pour prendre en sandwich un réceptacle tubulaire (490) et le conduit (41) entre les deux branches de la forme en U,
- une connexion rigide étant établie entre la console de fixation (49) et une portion du conduit (41), ladite portion étant espacée à la fois de la rampe d'alimentation (31) et du raccord d'injecteur (47),
- le raccord d'injecteur (47), le conduit (41) et la console de fixation (49) étant des pièces distinctes, et
- la console de fixation (49) étant espacée du raccord d'injecteur (47) et de la rampe d'alimentation (31),
- la console de fixation (49) comprenant un réceptacle tubulaire (490) et une plaque de connexion (495),
- le réceptacle tubulaire (490) et la plaque de connexion (495) étant des pièces séparées qui sont réunies ensemble au moyen d'au moins une connexion rigide supplémentaire,
- le réceptacle tubulaire (490) étant espacé du conduit (41) et
- la connexion rigide entre la console de fixation (49) et le conduit (41) étant établie entre une portion de fixation (496) de l'au moins une plaque de connexion (495), laquelle portion de fixation est éloignée du réceptacle tubulaire (490), et ladite portion du conduit (41).

2. Ensemble de rampe d'alimentation (3) selon la revendication précédente, dans lequel
- chaque conduite d'alimentation en carburant comprend un tube d'orifice de sortie (39) qui est attaché à une surface extérieure de la rampe d'alimentation (31) au moyen d'une connexion brasée ou soudée et
- la console de fixation (49) est espacée également du tube d'orifice de sortie (39).

3. Ensemble de rampe d'alimentation (3) selon l'une des revendications précédentes, dans lequel la portion de fixation (496) de la plaque de connexion (495) et/ou une portion de fixation supplémentaire (497) de la plaque de connexion (495), la portion de fixation supplémentaire (497) adjacente au réceptacle tubulaire (490), est/sont généralement en forme de section de coque cylindrique, une surface intérieure de la coque cylindrique correspondant à une surface extérieure de ladite portion du conduit (41) ou dudit réceptacle tubulaire (490), respectivement, pour établir un contact sur toute la surface entre la portion de fixation (496) et le conduit (41) ou la portion de fixation supplémentaire (497) et le réceptacle tubulaire (490), respectivement.

4. Ensemble de rampe d'alimentation (3) selon l'une des revendications 1 à 3, dans lequel la plaque de connexion (495) présente au moins un renflement de renforcement (499) dans une région centrale (498) entre le réceptacle tubulaire (490) et le conduit (41).

5. Ensemble de rampe d'alimentation (3) selon l'une des revendications 1 à 4, dans lequel la plaque de connexion (495) est fabriquée en tôle métallique.

6. Ensemble de rampe d'alimentation (3) selon l'une des revendications précédentes, dans lequel le raccord d'injecteur (47) présente un élément d'indexage (471) pour déterminer une position angulaire de l'injecteur de carburant respectif parmi les injecteurs de carburant (7) par rapport au raccord d'injecteur (47) et les pièces distinctes de la conduite d'alimentation en carburant (11) sont configurées et connectées de manière à ce qu'une position angulaire de la console de fixation (49) par rapport à l'élément d'indexage (471) et/ou par rapport à la direction d'allongement (E) de la rampe d'alimentation (31) puisse être ajustée au cours de l'assemblage de l'ensemble de rampe d'alimentation (3).

7. Ensemble de rampe d'alimentation (3) selon l'une des revendications précédentes, dans lequel la connexion rigide et/ou la ou les connexions rigides supplémentaires est/sont des connexions brasées ou soudées.

8. Ensemble de rampe d'alimentation (3) selon l'une des revendications précédentes, dans lequel le conduit (41) est connecté au raccord d'injecteur (47) au moyen d'une connexion brasée ou soudée.

9. Ensemble de rampe d'alimentation (3) selon l'une des revendications précédentes, dans lequel le réceptacle tubulaire (490) présente une ouverture (491) qui perfore le réceptacle tubulaire (490) dans une direction de montage (M), un axe central (C) de l'ouverture (491) étant parallèle à un axe central (R) de ladite portion du conduit (41).

10. Ensemble de rampe d'alimentation (3) selon l'une des revendications précédentes, comprenant au moins l'un des éléments suivants :
- un tube d'orifice de capteur (37) partant de la rampe d'alimentation (31),
- une oreille de fixation (13) pour fixer la rampe d'alimentation (31) au moteur à combustion interne (1),
- le tube d'orifice de capteur (37) et/ou l'oreille de fixation (13) étant fixés à une surface extérieure de la rampe d'alimentation (31) par une connexion respective brasée ou soudée et/ou
- le tube d'orifice de capteur (37) et/ou l'oreille de fixation (13) étant formés et connectés à la rampe d'alimentation (31) de telle sorte qu'une position du tube d'orifice de capteur (37) et/ou de l'oreille de fixation (13), respectivement, sur la surface extérieure, puisse être ajustée au cours de l'assemblage de l'ensemble de rampe d'alimentation (3) .

11. Ensemble de rampe d'alimentation (3) selon l'une des revendications précédentes, comprenant au moins l'un des éléments suivants :
- un raccord d'entrée (33) reçu dans la rampe d'alimentation (31),
- un bouchon d'extrémité (35) enfoncé dans la rampe d'alimentation (31), le raccord d'entrée (33) et/ou le bouchon d'extrémité (35) étant fixés à la rampe d'alimentation (31) par une connexion respective brasée ou soudée.
